# EUROPEAN PATENT APPLICATION

(11) **EP 3 886 031 A1**
(43) Date of publication of application: **29.09.2021**
(21) Application number: 18900576.2
(22) Date of filing: 21.11.2018
(51) Int. Cl.: G06Q 30/06

(54) **PRODUCT CUSTOMIZING METHOD VIA TERMINAL**

(71) Applicant: IL INC., Gangnam-gu Seoul 06373 (KR)
(72) Inventor: CHANG, Kwangyoung, Seoul 06373 (KR); CHANG, Seyoung, Seoul 05786 (KR); SEOK, Woojung, Seoul 06373 (KR)
(74) Representative: Frenkel, Matthias Alexander
(86) International application number: PCT/KR2018/014360
(87) International publication number: WO 2020/105752

(57) **Abstract**

A method of customizing a product through a terminal according to an embodiment of the present invention includes providing product information including customizable sections to a user, providing one or more pieces of candidate image data for customizing a first section among the customizable sections using a first user interface (UI), receiving first specific customization image data selected by the user from among the pieces of candidate image data for customizing the first section, providing one or more pieces of candidate image data, in which the first specific customization image data has been applied to the first section, for customizing a second section using a second UI, receiving second specific customization image data selected by the user from among the pieces of candidate image data for customizing the second section, and providing a final image of the product in which respective pieces of specific customization image data have been applied to all of the customizable sections when the respective pieces of specific customization image data for all of the customizable sections are received.

## Description

### [Technical Field]

The present invention relates to a product customization method, and more particularly, to a method of enabling a user to easily and conveniently customize a desired product using a terminal.

### [Background Art]

Generally, in offline stores, conventional consumers directly visually check finished products provided by managers one by one to select and purchase desired products.

Such a conventional method involves visiting an offline store in person and causes inconvenience to consumers due to limitations in time and space.

With the development of digital technology, online transaction methods are coming into common use together with such an offline transaction method. Such an online method refers to a method of selecting and purchasing, in an online space such as a web page, a product which is on sale in an offline store as well.

This online method can somewhat mitigate the problem of the conventional offline method, that is, limitations in time and space. However, there is the problem of reliability caused by a transaction method, and it is not possible to directly see or experience products. Therefore, the degree of satisfaction from a purchase frequently comes into question.

Further, current online and offline transactions are mainly targeted at finished products, which limits product selection of customers and degrades the degree of satisfaction.

In this regard, sections or parts are selectable in some cases. However, this is not sufficient to solve the above-described problems and cannot completely fulfill consumers' needs.

### [Disclosure]

### [Technical Problem]

The present invention is directed to providing a service method which enables a consumer to customize his or her desired product through a terminal.

The present invention is also directed to providing a method of enabling anyone to easily and conveniently customize his or her desired product by providing a customizing user interface (UI) or user experience (UX) for providing various customization candidate image data according to product.

The present invention is also directed to providing a system for providing the above-described service.

The technical objectives of the present invention are not limited to those mentioned above, and other objectives which have not been mentioned above will be clearly understood by those of ordinary skill in the art from the following descriptions.

### [Technical Solution]

One aspect of the present invention provides a method of customizing a product through a terminal, the method including: providing product information including customizable sections to a user; providing one or more pieces of candidate image data for customizing a first section among the customizable sections using a first UI; receiving first specific customization image data selected by the user from among the pieces of candidate image data for customizing the first section; providing one or more pieces of candidate image data, in which the first specific customization image data has been applied to the first section, for customizing a second section using a second UI; receiving second specific customization image data selected by the user from among the pieces of candidate image data for customizing the second section; and when each piece of specific customization image data for all of the customizable sections is completely received, providing a final image of a product in which each piece of specific customization image data has been applied to all of the customizable sections.

The customizable sections may relate to an appearance of the product including design, parts, or color, and the one or more pieces of candidate image data may be images of the product with different appearances.

The customizable sections and the number of pieces of candidate image data for the customizable sections may be preset according to a type of the product.

The providing of the candidate image data may include requesting the user to input individual data when an individual data input option of the user is preset for customizing of the first section or the second section and applying received individual data to the first section or the second section when the individual data input by the user is received.

The first UI and the second UI may provide the candidate image data so that browsing the candidate image data or selecting or deselecting specific customization image data may be performed by a preset upward, downward, leftward, or rightward motion input.

When browsing the candidate image data is set to a leftward or rightward motion input in the first UI and the second UI, the one or more pieces of candidate image data may be provided in a sequence or a reverse sequence every time the user inputs a leftward or rightward motion.

When selecting or deselecting the specific customization image data are respectively set to downward and upward motion inputs in the first UI and the second UI, the specific customization image data may be selected or deselected by a downward or upward motion input of the user while the candidate image data is browsed.

The first UI or the second UI may provide information indicating at least one of the number of customizable sections, the number of pieces of candidate image data, the number of customized sections among the customizable sections, and the number of non-customized sections among the customizable sections.

The first UI and the second UI may be consecutively displayed in a mobile terminal of the user according to a motion input of the user and provide recommended candidate image data determined according to a preset reference when providing the one or more pieces of candidate image data.

### [Advantageous Effects]

According to the above-described present invention, it is possible to obtain the following effects. However, effects obtained through the present invention are not limited thereto.

First, according to the present invention, it is possible to provide a service method which enables a user to customize a desired product through a terminal.

Second, according to the present invention, it is possible to provide a method of enabling anyone to easily and conveniently customize his or her desired product by providing a customizing user interface (UI) or user experience (UX) for providing various customization candidate image data according to the product.

Third, according to the present invention, it is possible to provide a system for providing the above-described service.

### [Description of Drawings]

FIG. 1 is a schematic diagram of a product customization service system according to an embodiment of the present invention.
FIG. 2 is a block diagram of a device for a product customization service according to an embodiment of the present invention.
FIG. 3 is a flowchart illustrating a product customization service method according to an embodiment of the present invention.
FIG. 4 is a view illustrating customizable sections in a product according to an embodiment of the present invention.
FIGS. 5 to 13 are views illustrating a product customization service user interface (UI) or user experience (UX) and a control method thereof according to an embodiment of the present invention.

### [Modes of the Invention]

Hereinafter, exemplary embodiments of the present invention will be described in detail with reference to the accompanying drawings. A detailed description to be disclosed below together with the accompanying drawings is provided to describe the exemplary embodiments of the present invention and does not represent the sole embodiment for carrying out the present invention.

The embodiments are provided merely to fully disclose the present invention and completely inform those of ordinary skill in the art of the scope of the present invention. The present invention is defined only by the scope of the claims.

In some cases, known structures and devices may be omitted or block diagrams mainly illustrating key functions of the structures and devices may be provided so as to not obscure the concept of the present invention. Throughout the specification, like reference numerals will be used to refer to like elements.

Throughout the specification, when a portion is referred to as "comprising" or "including" an element, this indicates that the element may further include another element instead of excluding another element unless particularly stated otherwise.

The term "... unit" used herein refers to a unit that performs at least one function or operation and may be implemented in hardware, software, or a combination thereof. Further, "a" or "an," "one," and the like may be used to include both the singular form and the plural form unless indicated otherwise in the context of the present invention or clearly denied in the context.

In addition, specific terms used in the embodiments of the present invention are provided only to aid in understanding of the present invention. Unless otherwise defined, all terms including technical or scientific terms used herein have the same meaning as commonly understood by those of ordinary skill in the art to which the present invention pertains. The use of the specific terms may be modified in a different form without departing from the technical spirit of the present invention.

This specification provides a service method of enabling a consumer to customize a desired product through a terminal according to the present invention. In particular, the present invention describes, in detail, a method of enabling anyone to easily and conveniently customize his or her desired product by providing a customizing user interface (UI) or user experience (UX) for providing various customization candidate image data according to product.

Hereinafter, various embodiments of the present invention will be described with reference to the accompanying drawings.

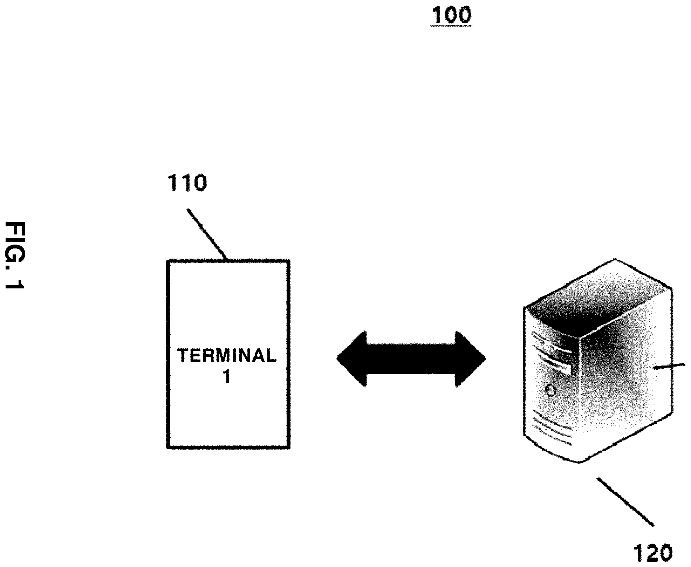

FIG. 1 is a schematic diagram of a product customization service system 100 according to an embodiment of the present invention.

Although only main elements of the product customization service system 100 are shown in FIG. 1 for the applicant's convenience of description, the present invention is not limited thereto.

Referring to FIG. 1, the product customization service system 100 includes a terminal 110 and a processor 120.

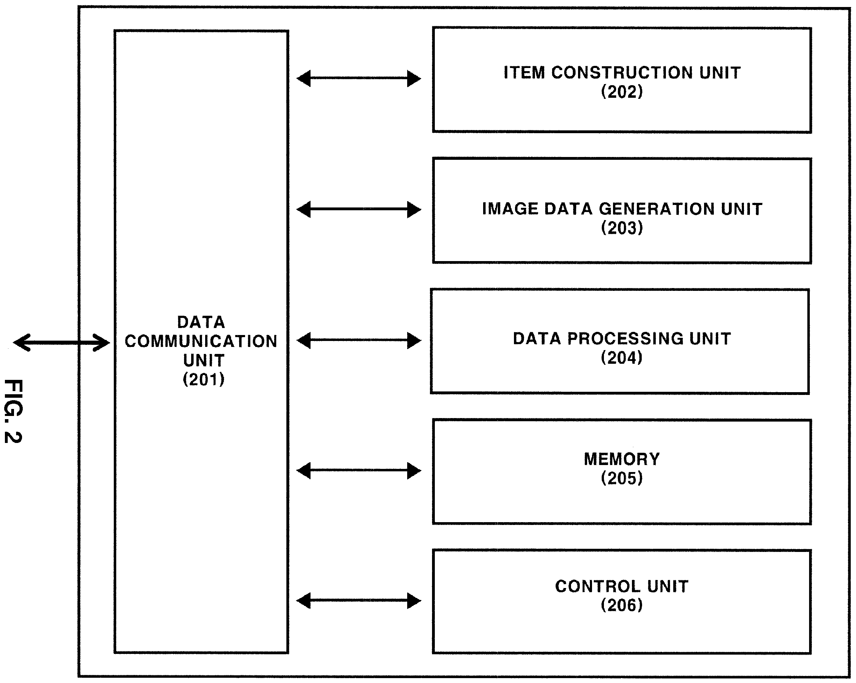

According to an embodiment, although not shown in FIG. 1, the processor 120 may include at least one of a payment processor, a database (DB), and the like. Here, the term "include" may denote both "to have within" and "to interoperate with an external independent entity." The DB may refer to an element other than a memory 204 of FIG. 2 which will be described below.

According to an embodiment, the single terminal 110 is shown as an example in FIG. 1 for convenience of description, but the present invention is not limited thereto. For example, there may be a plurality of terminals, and the terminals may communicate data to each other directly or through the processor 120.

According to an embodiment, the terminal 110 and the processor 120 of FIG. 1 can exchange various kinds of data corresponding to the present invention with each other via a wired or wireless communication network.

The term "terminal" used in this specification in addition to FIG. 1 collectively refers to all types of devices capable of providing a product customization service according to the present invention.

According to an embodiment, the terminal may be a device including a display to display a UI or UX for a product customization service. The display may be any display capable of outputting data for a product customization service corresponding to the present invention to a user regardless of size and the like.

According to an embodiment, the terminal may be a device including an element for inputting and/or outputting voice for a product customization service.

According to an embodiment, the terminal may be a device including an element which recognizes a gesture of the user (e.g., a swipe, a click, a touch, a voice input, and iris recognition) for a product customization service and processes data of the recognized gesture.

According to an embodiment, the terminal may be a device including an element which receives a touch input of the user for a product customization service and processes data resulting from the received touch input.

According to an embodiment, the terminal may be a device including sensing modules which sense various kinds of data for a product customization service. The sensing modules may include various sensors which have been commercialized or will be commercialized in the future, such as an image capturing sensor including a camera sensor, a gyro sensor, and a location sensor.

According to an embodiment, the terminal may be a device including a combination of at least two of the above-described embodiments for a product customization service.

As described above, various inputs may be used to provide a product customization service through a terminal. However, for the applicant's convenience of description, touch inputs such as a touch, a touch and drag, and a swipe, are described below as an embodiment. It is to be noted that the present invention is not limited to touch inputs, and various input methods, such as voice input and iris recognition, available for a user can be applied to the present invention.

Meanwhile, when there are a plurality of terminals in a wired or wireless network, it is unnecessary for all of the terminals to have the same type, attribute, performance, and the like. However, it is necessary to meet minimum requirements in order to appropriately process and output product customization service data according to an embodiment of the present invention.

In this regard, the terminal 110 may include all devices which include at least one of a display for outputting image data and a speaker for outputting audio data, such as a smart phone, a personal computer (PC), a television (TV), a monitor, a wearable device, and a dedicated device for a product customization service. However, the scope of the present invention is not limited to the examples.

According to an embodiment, the terminal 110 may be at least one of a terminal device, a terminal, a mobile station (MS), a mobile subscriber station (MSS), a subscriber station (SS), an advanced mobile station (AMS), a wireless terminal (WT), a machine-type communication (MTC) device, a machine-to-machine (M2M) device, and a device-to-device (D2D) device.

The above-described terminals are merely examples, and in the present invention, a terminal should be interpreted as incorporating all devices which have been commercialized or will be commercialized in the future and are capable of data or signal transmission in addition to the above-described examples.

Also, the terminal 110 may include an application program interface (API) and the like for processing application data. The application data may be data related to an operation of downloading an application for a product customization service corresponding to the present invention to the terminal and data related to execution of the application after installation.

In this regard, according to an embodiment, a product customization service corresponding to the present invention may be provided by executing the application installed in the terminal.

According to an embodiment, a product customization service corresponding to the present invention may be provided in the form of a web service, such as a web page.

In FIG. 1, the processor 120 refers to hardware or software capable of handling, that is, processing, storing, etc., product customization service data corresponding to the present invention.

According to an embodiment, the processor 120 may be referred to as a server and the like. However, the processor 120 corresponding to the present invention is not to be interpreted in a limited manner due to a name thereof.

According to an embodiment, the processor 120 may be any one of a cloud server, an Internet protocol (IP) multimedia subsystem (IMS) server, a telephony application server, an instant messaging (IM) server, a media gateway control function (MGCF) server, a messaging gateway (MSG) server, a call session control function (CSCF) server, and the like.

Even when "a (or the) terminal" is mentioned herein for convenience of description, it may be interpreted as a (or the) plurality of terminals depending on context and embodiment. This is the same for "a (or the) processor."

Meanwhile, a wired or wireless communication network is a data communication network which supports data communication of various product customization service data corresponding to the present invention, such as text, digital images, digital videos, and digital voice information, between the elements of the product customization service system 100. The wired or wireless communication network is not limited to a specific type.

According to an embodiment, the wired or wireless network may be an IP network which supports massive data communication through the IP or an all IP network in which different IP networks are integrated.

According to an embodiment, the wired or wireless network may be one of a wired network, a mobile communication network including a wireless broadband (WiBro) network and a wideband code division multiple access (WCDMA) network, a mobile communication network including a high speed downlink packet access (HSDPA) network and a long term evolution (LTE) network, a mobile communication network including an LTE advanced (LTE-A) network, a satellite communication network, and a wireless fidelity (Wi-Fi) network, or may be formed of a combination of at least two or more thereof.

A product customization service method according to embodiments of the present invention will be described in further detail below.

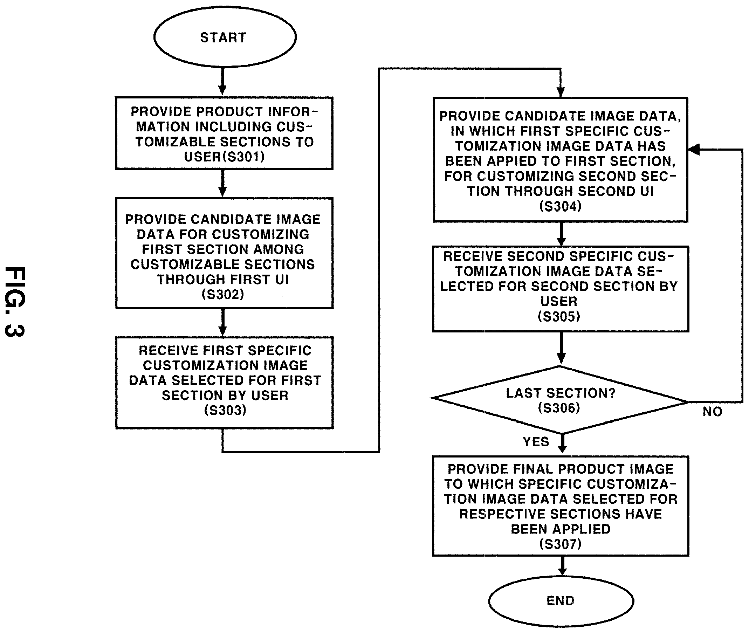

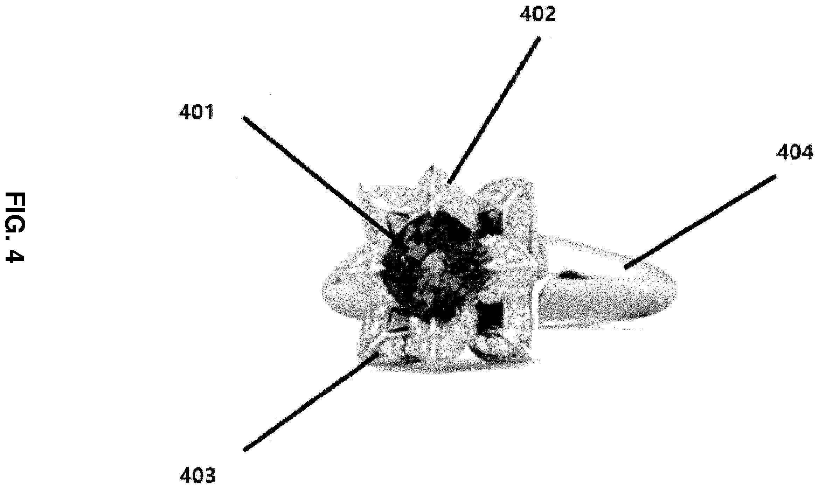

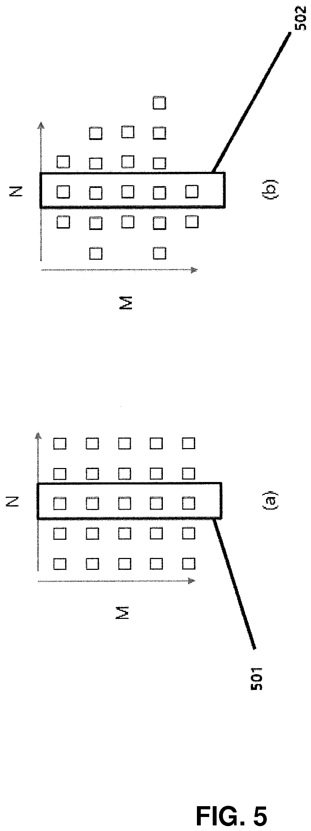

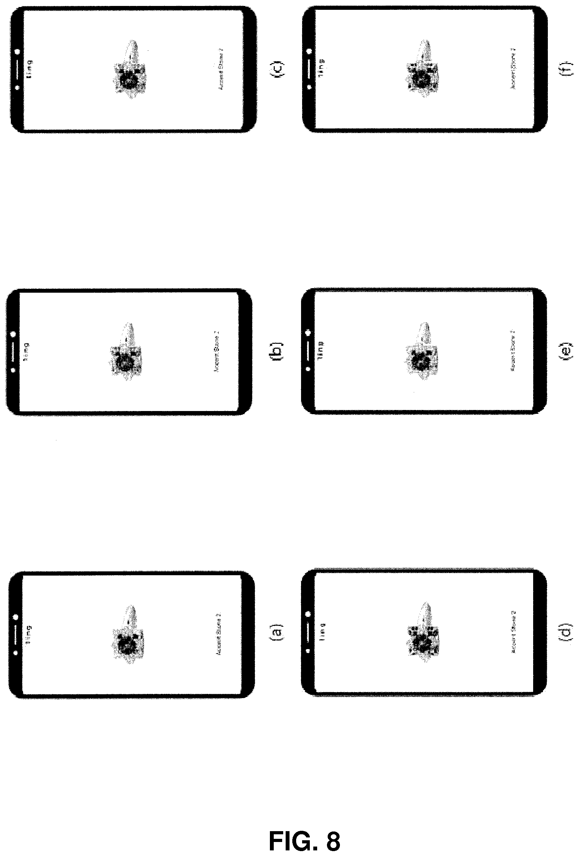

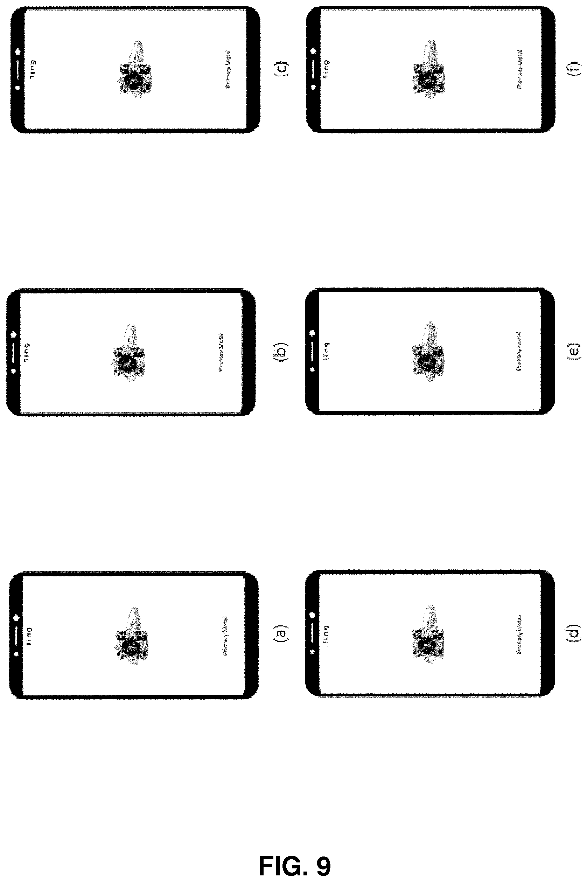

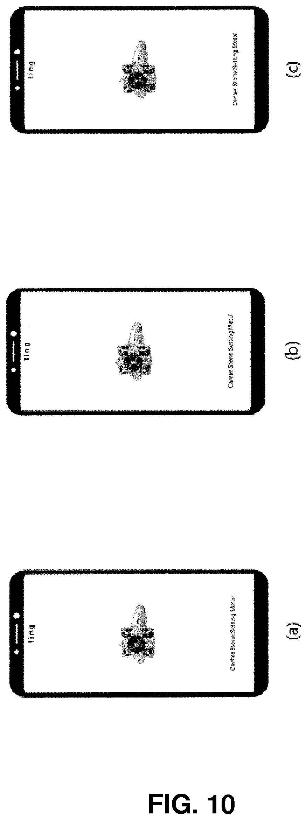

FIG. 2 is a block diagram of a device for a product customization service according to an embodiment of the present invention. FIG. 3 is a flowchart illustrating a product customization service method according to an embodiment of the present invention. FIG. 4 is a view illustrating customizable sections in a product according to an embodiment of the present invention. FIGS. 5 to 13 are views illustrating a product customization service UI or UX and a control method thereof according to an embodiment of the present invention.

Although FIG. 2 is described as constituent blocks of the terminal 110 for a product customization service, FIG. 2 is not limited thereto. In other words, constituent blocks of FIG. 2 may be constituent blocks of the processor 120 for a product customization service.

According to an embodiment, depending on function and the like, some of the elements of FIG. 2 may be elements of the terminal 110, and others may be elements of the processor 120.

However, FIG. 2 is described below as constituent blocks of the terminal 110 to aid in understanding the present invention for convenience of description.

Referring to FIG. 2, the terminal 110 includes a data communication unit 201, an item construction unit 202, an image data generation unit 203, a data processing unit 204, a memory 205, and a control unit 206.

According to an embodiment, although not shown in FIG. 2, an additional DB besides the memory 205 may be externally or internally connected to the terminal 110.

According to an embodiment, in the terminal 110, one or more of the aforementioned elements may be omitted, or one or more elements may be added.

For example, the terminal does not necessarily have the memory 205 therein.

Meanwhile, there may be a plurality of memories 205. In this case, according to an embodiment, some of the memories 205 may be built-in memories, and others may be external memories. The memories 204 may correspond to or may be replaced by the DB described in FIG. 1.

According to an embodiment, the processor 120 may temporarily store only address data, such as a uniform resource locator (URL), for storing data and provide the address data to the terminal 110 without including a hardware memory, that is, without directly storing the corresponding data.

According to an embodiment, in the terminal 110, one or more of the shown elements may be modularized or vice versa.

The data communication unit 201 supports data communication with various external devices including the processor 120 with regard to a product customization service.

The item construction unit 202 constructs various items for a product customization service. Constructed items may be stored in the memory 205, the DB, and the like in advance.

The items will be described in detail below in the corresponding section.

The image data generation unit 203 generates product image data and various kinds of image data for providing product image data and the like through a product customization service corresponding to the present invention.

The image data may be videos as well as still images and may be virtual reality (VR) or augmented reality (AR) videos or images.

The data processing unit 204 processes various kinds of data, such as control data for control of the control unit 206 as well as the above-described elements, that is, data related to a product customization service corresponding to the present invention.

As described above, the memory 205 stores various kinds of data related to a product customization service corresponding to the present invention, such as item data, product specification data, product image data, candidate image data, individual data input by a user, and control data.

The control unit 206 controls overall operation of the terminal 110 and an element (elements) for the operation regarding a product customization service.

First, in this specification, a jewelry product will be described as an example to aid in understanding the present invention and increase the applicant's convenience of description. In particular, a ring will be described as an example of the jewelry product. However, the present invention is not limited thereto. The present invention can be applied to jewelry products, such as earrings, a necklace, a brooch, and glasses, other than a ring or similar products and can also be used in a product customization service for various products, such as a mobile phone, an automobile, and a computer, other than the jewelry products or the similar products.

A jewelry product customization service method is described with reference to FIG. 3 as follows.

For convenience of description, the jewelry product customization service method will be described from the viewpoint of the terminal 110. However, the same or similar method may be used from the viewpoint of the processor 120 or other viewpoints, and this can be self-evidently implemented by those of ordinary skill in the art.

Meanwhile, it is described below that "selection," "deselection," "browsing," etc. are performed through a user's swipe or touch input on the display of the terminal 110. As described above, however, the present invention is not limited thereto, and various input methods, such as voice input and iris recognition, available for the user can be applied to the present invention.

The user indicates a consumer who receives a product customization service through the terminal. However, the user is not limited thereto and may indicate an administrator, such as a manager, who provides a product customization service through the terminal. When the term "user" is used for description in this specification, the user indicates a consumer or an administrator but is not limited thereto. The user may indicate both a consumer and an administrator. This will be understood from the context of a sentence in which the term is used.

The terminal 110 provides product information including customizable sections to a user (S301).

For example, referring to FIG. 4, respective sections 401 to 404 constituting a product are shown. The respective sections indicate various elements of the product, and in particular, some or all of the elements may be customizable sections.

Referring to FIG. 4, design, stone 1, stone 2, material, size, color, etc. may be customizable sections in a ring.

According to an embodiment, the customizable sections may be diversely defined depending on the corresponding product and determined in advance according to the product.

The terminal 110 may provide one or more pieces of candidate image data for customizing a first section among the customizable sections of the product provided through step S301 using a first UI (S302).

The pieces of candidate image data are images showing different appearances of the product (e.g., design, parts, or color). More specifically, the pieces of candidate image data may be a plurality of images presenting each of the customizable sections in different appearances. The candidate image data may be composed of at least one image and may be composed of a plurality of images according to a configuration.

The terminal 110 displays the candidate image data for customizing the first section to the user and may receive and transfer first specific customization image data selected from among the pieces of candidate image data by the user to a server. The server receives the first specific customization image data (S303).

The terminal 110 may provide one or more pieces of candidate image data, in which the first specific customization image data has been applied to the first section, for customizing a second section using a second UI (S304). The terminal 110 may receive one or more pieces of candidate image data for customizing the second section from the server to perform step S304. In this case, the pieces of candidate image data may be one or more images in which the first specific customization image data selected by the user has been already applied to the first section.

To perform step S304 as described above, the first UI and the second UI may be consecutively displayed in the terminal 110 of the user. In other words, when there is an input of the user (e.g., a swipe motion input, a touch, a click, a voice input, or iris recognition) while the first UI is displayed in the terminal 110, the screen of the terminal 110 may be switched to display the second UI. The switch may be performed through various effects, such as dissolve, page turn, and wipe.

The terminal 110 displays the candidate image data for customizing the second section to the user and may receive and transfer second specific customization image data selected from among the pieces of candidate image data by the user to the server. The server receives the second specific customization image data (S305).

After step S305, the terminal 110 determines whether the second section is the last one of the customizable sections in the product (S306).

When it is determined in step S306 that the corresponding section is the last section, that is, when respective pieces of specific customization image data for all of the customizable sections have been selected and received, the terminal 110 may receive a final image of the product from the server and display the final image to the user. The final image of the product is an image to which pieces of specific customization image data selected for all of the customizable sections of the product by the user have been applied (S307).

For convenience, only the first and second sections are described in this specification, but the present invention is not limited thereto. The above process is performed for all of the customizable sections (n which is a positive integer) of the product. For example, when a total of five sections are customizable in the product, the process may be performed up to the fifth section.

Also, according to an embodiment of the present invention, URL information may be allocated to each customization step and each piece of candidate image data of each step and shared to customize all of the customizable sections of the product.

In other words, since unique URL information may be allocated to each customization step and candidate image data of each step, it is possible to directly access a specific customization step and/or candidate image data of a specific step through a web or application. Likewise, URL information for accessing a specific customization step and/or candidate image data of a specific step may be shared with a third person through the Internet or an application.

Meanwhile, step S306 may be performed every time a selection signal for each section is input or received or may be omitted. For example, when information on the customizable sections of the product is stored in advance, step S306 may be omitted.

According to an embodiment, the product selection may be input or received using at least one of various input methods of the user, such as photography or capturing through an image capturing device of the terminal, a voice input and touch, a swipe motion, a click, a voice input, and iris recognition.

According to an embodiment, the UI or UX may provide candidate image data of the customizable sections of the product, and the UI or UX may be provided in the form of an N×M matrix as shown in FIG. 5A. Here, each of N and M may be a positive integer, and a 5×5 matrix is shown in FIG. 5A for convenience. This means that there are a total of five customizable sections and each of the five sections provides a total of five pieces of candidate image data.

However, in the present invention, the UI or UX may be provided in an irregular form rather than the form of an NxM matrix as shown in FIG. 5B. In other words, respective customizable sections can include different numbers of pieces of candidate image data. In the case of FIG. 5B, there are a total of five customizable sections, but first, second, third, fourth, and fifth sections provide three, five, four, six, and two, that is, different numbers of pieces of candidate image data, respectively.

Meanwhile, as mentioned above, respective customizable sections described above in this specification indicate various elements of a product, and in particular, some or all of elements may be customizable sections. Each customizable section may include at least one piece of candidate image data in which the section is displayed in different designs, materials, colors, and parts.

According to an embodiment, assuming that there are a total of six customizable sections including design, stone 1, stone 2, stone 3, material 1, and material 2, a product customization service UI or UX control method according to the present invention is described in further detail as follows.

Also, assuming that the design section among the customizable sections has been already selected by the user for convenience of description, the product customization service UI or UX control method is described below.

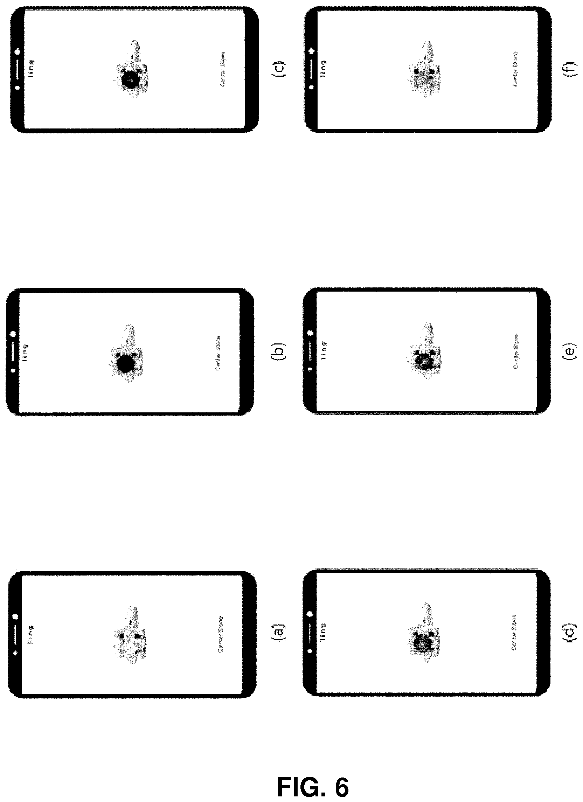

According to an embodiment, since it is assumed that the user has made a selection for a design which is the first section among the customizable sections, the user can check one or more pieces of candidate image data for customizing the second section as shown in FIG. 6. At this time, in connection with the one or more pieces of candidate image data for customizing the second section, the design which has been selected by the user in a previous step may have been applied to the first section among the customizable sections in each piece of the candidate image data.

Meanwhile, the number of customizable sections and the number of pieces of candidate image data for the customizable sections may be preset according to the type of product. In FIG. 6, for convenience of description, it is assumed that there are a total of six pieces of candidate image data for customizing the second section.

In the present invention, the UI or UX may perform browsing of the candidate image data or selecting or deselecting of specific customization image data. More specifically, when the user inputs a swipe motion in one arbitrary direction among preset up, down, left, and right directions on the UI or UX in which the candidate image data is displayed, the UI or UX may perform browsing of the candidate image data or selecting or deselecting of specific customization image data.

When browsing of candidate image data is set to a leftward or rightward swipe motion input, the UI or UX may provide the one or more pieces of candidate image data in sequence or reverse sequence every time the user inputs a leftward or rightward swipe motion.

Also, assuming that selection and deselection are respectively set to upward and downward swipe motion inputs, when the user wants to select or deselect specific customization image data while browsing the candidate image data, the user may input an upward or downward swipe motion while browsing the candidate image data. Then, the UI or UX may perform selecting or detecting of the specific customization image data.

Also, the UI or UX may be configured to cause the user to make a preceding input (e.g., a click, a double click, a voice input, or an iris input) of selecting corresponding image data before inputting a corresponding swipe input during a process of performing browsing of the candidate image data or selecting or deselecting of a specific customization image data.

Therefore, the user may make an upward swipe motion input to make a selection for a design which is the first section among the customizable sections. In this case, the screen of the terminal 110 may be displayed as shown in FIG. 6A.

At this time, the one or more pieces of candidate image data may be provided in sequence or reverse sequence every time the user inputs a leftward or rightward swipe motion. In other words, when a leftward swipe motion is input while the screen of the terminal 110 is displayed as shown in FIG. 6A, the screen of the terminal 110 may be displayed as shown in FIG. 6B. In this case, when a leftward swipe motion is input again, the screen of the terminal 110 may be displayed as shown in FIG. 6C. The user may repeatedly input a leftward swipe motion such that the screen of the terminal 110 may be displayed as shown in FIG. 6F. In this case, when the user inputs a leftward swipe motion once again, the screen of the terminal 110 may be displayed as shown in FIG. 6A again or may show an indication or notification indicating that the screen of FIG. 6F is the last candidate image data to the user in various ways while maintaining the screen of FIG. 6F.

When the user inputs a rightward swipe motion while the screen of FIG. 6C is displayed, the screen of the terminal 110 may be displayed as shown in FIG. 6B.

Meanwhile, when the user wants to select the candidate image data displayed in the screen of FIG. 6E in connection with the one or more pieces of candidate image data for customizing the second section, the user may input an upward swipe motion while browsing the candidate image data displayed in the screen of FIG. 6E.

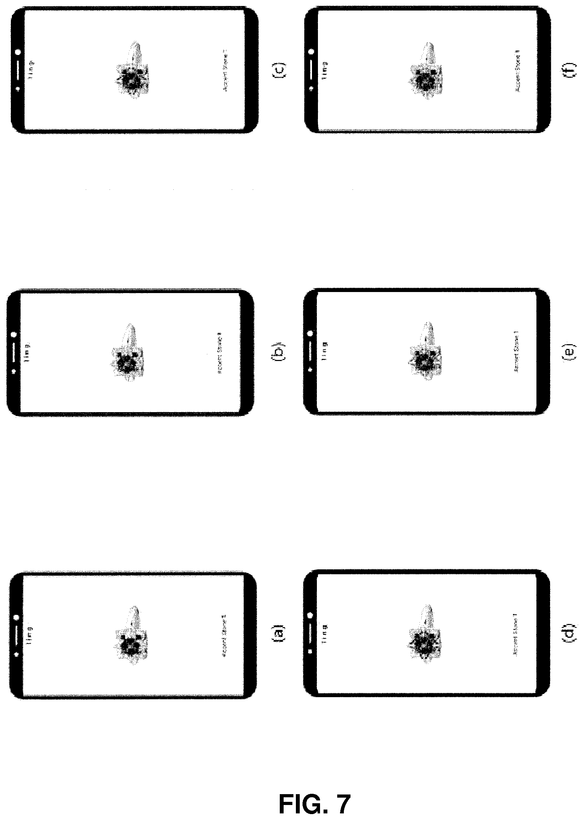

In this case, the candidate image data displayed in the screen of FIG. 6E is selected. Then, the user may check one or more pieces of candidate image data for customizing a third section as shown in FIG. 7.

At this time, in connection with the one or more pieces of candidate image data for customizing the third section, the design which has been selected by the user in the previous step and the candidate image data displayed in the screen of FIG. 6E may have been applied to the first section and the second section among the customizable sections in each piece of the candidate image data.

In connection with the one or more pieces of candidate image data for customizing the third section, the user may browse the one or more pieces of candidate image data in sequence or reverse sequence by inputting a leftward or rightward swipe motion as described above.

Likewise, when the user wants to select specific candidate image data from among the one or more pieces of candidate image data, the user may make the selection by inputting an upward swipe motion.

On the other hand, while the user is browsing the one or more pieces of candidate image data for customizing the third section, the user may cancel the selection for the first section and/or the second section which have been previously made for customization. The user may perform the deselection by inputting a downward swipe motion. In other words, while browsing the candidate image data for the third section, the user can cancel the previously made selection for the second section by inputting a downward swipe motion once. Then, it is possible to browse the one or more pieces of candidate image data for customizing the second section by inputting a leftward or rightward swipe motion.

When the user inputs a downward swipe motion twice while browsing the candidate image data for the third section, the user can cancel the previously made selections for the first section and the second section. Then, it is possible to browse one or more pieces of candidate image data for customizing the first section by inputting a leftward or rightward swipe motion.

Therefore, the user can browse, select, or deselect candidate image data for the respective customizable sections shown in FIGS. 6 to 9 through a swipe motion on the basis of the UI or UX provided by the present invention.

However, the swipe motion is an example, and the above embodiment can be implemented with various input methods (e.g., a click and a drag and drop) with which the user can indicate his or her intention to the terminal 110.

Meanwhile, according to an embodiment of the present invention, the terminal 110 provides candidate image data for each customizable section of one product in one step. When any one of the pieces of candidate image data is selected, the terminal 110 repeats the previous step for other sections and ultimately performs the step for all of the customizable sections in sequence.

Subsequently, when the last one of the customizable sections is selected, all of the sections of the product are customized. Therefore, it is possible to provide a final customized product image including customized image data of all of the sections to the user.

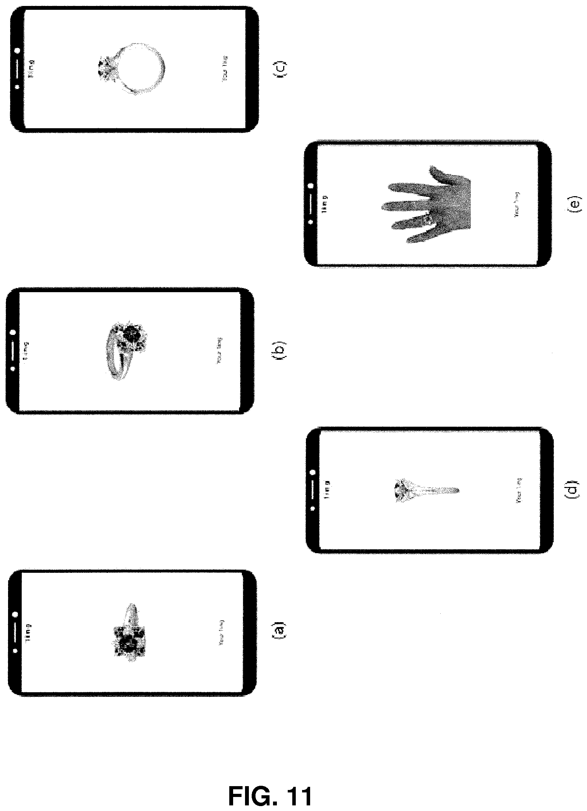

In other words, a final image of the product can be provided as shown in FIG. 11, and the final image of the product can be displayed at various angles and in various presentations as shown in FIGS. 11A to 11E. The final images of the product are final images in which customization image data selected for the respective customizable sections by the user have been applied to all of the customizable sections.

In FIG. 11, when a final image of the product currently displayed on the screen is FIG. 11A, it is likewise possible to browse the final images of the product by inputting a leftward or rightward swipe motion, and it is possible to make an order, payment, delivery request, or deselection of the product by inputting an upward or downward swipe motion.

Also, although not shown in FIG. 11, a final image of the product may be provided to the user through AR technology. For example, when the user's actual finger is shown in a camera or the like of the terminal 110, a final image of the product may be implemented through AR technology and applied to the user's actual finger displayed through the camera of the terminal 110 such that the final image of the product may be displayed together with the user's actual finger.

Therefore, the present invention provides customizable sections of a specific product to a user by stages and provides a customized product image reflecting a selection made by the user in each step to the user. In this way, the present invention makes the product customization service more intuitive and convenient.

Meanwhile, the UX or UI corresponding to the present invention may provide one or more pieces of information together that indicate at least one of the number of customizable sections, the number of pieces of candidate image data, the number of customized sections among the customizable sections, and the number of non-customized sections among the customizable sections. When providing candidate image data, the UX or UI may provide recommended candidate image data determined according to a preset reference as well.

The recommended candidate image data may be an image of the corresponding product or a relevant product or may be consistent with the frequency at which the corresponding product is revealed in an image of a celebrity, such as an entertainer, wearing the corresponding product, a social network service (SNS), and the like.

In the recommended candidate image data, an image of another product related to the corresponding product, for example, another product that can coordinate with the corresponding product, may be recommended. Each piece of image data can be enlarged or reduced, and an enlargement or reduction ratio which has been selected once may be applied to a customizable section of a next step.

When an individual data input option of the user is preset for the customizable sections, the UX or UI may request the user to input individual data in the case of providing the candidate image data. In this case, when individual data is input by the user, it is possible to apply the input individual data to the customizable sections.

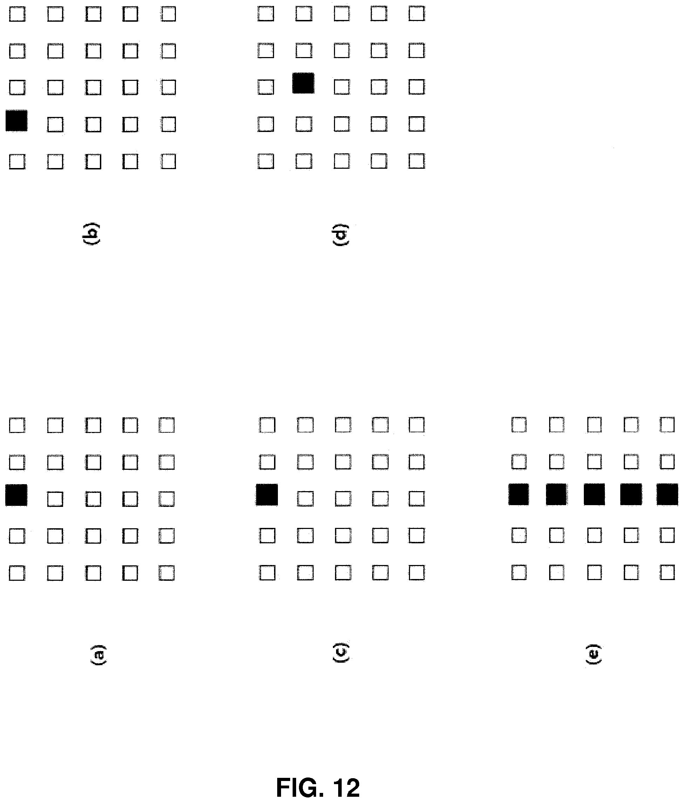

In other words, the above embodiment may be understood as intended to receive individual data (words) from the user when some or all of the customizable sections include carved words of the user or the like. FIG. 12 shows a product customization service UI or UX. Although FIG. 12 shows a product customization service UI or UX in the form of a 5×5 matrix, this is only for convenience of description. As mentioned above, customizable sections may include different numbers of pieces of candidate image data and thus may not be configured in the form of a matrix on the product customization service UI or UX.

Meanwhile, operations of FIG. 12A to 12E may be controlled with swipe motions as shown in FIGS. 6 to 10.

In FIG. 12A, a mark "■" is assumed to indicate a section currently displayed in the screen of the terminal. Therefore, when the screen is moved to the left by swiping the screen to the right in FIG. 12A, the section currently displayed on the screen of the terminal is changed as shown in FIG. 12B. In other words, the mark "■" may indicate the section currently displayed on the screen of the terminal in FIG. 12B.

When the screen is move to the right by swiping the screen to the left in FIG. 12B, the section currently displayed on the screen of the terminal is changed as shown in FIG. 12C. Also, when the screen is move down by swiping the screen up in FIG. 12C, the section currently displayed on the screen of the terminal is changed as shown in FIG. 12D.

FIG. 12E illustrates positions or an arrangement of customizable sections in a product customization service UI or UX structure. For example, image data selected from the customizable sections may be at a selected first, center, or last position in each row.

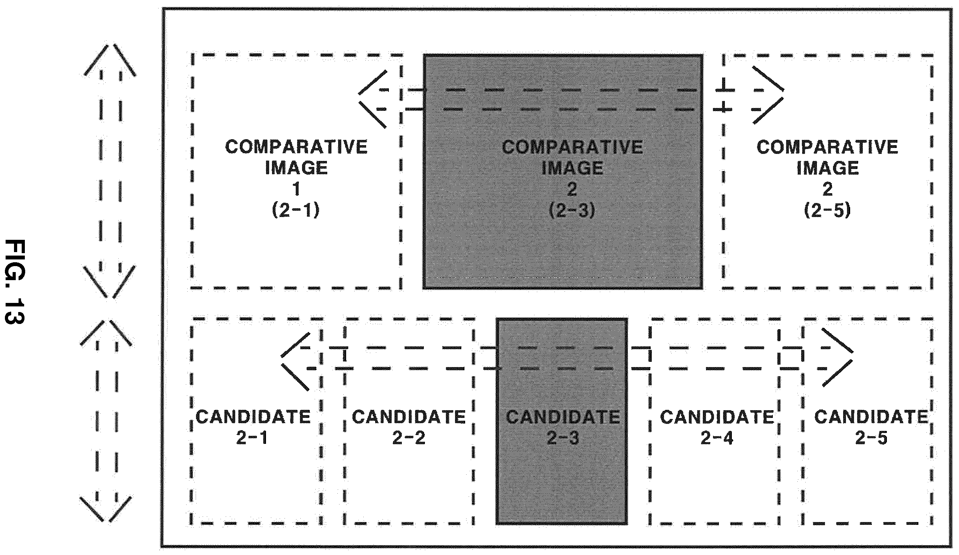

According to an embodiment, when a user input is a left and right swipe input, it is possible to provide a product image based on a currently selected candidate data image and a product image based on another candidate data image together as shown in FIG. 13.

Meanwhile, the above-described method can be written as a program that can be executed in a computer and can be implemented by a general-use digital computer which runs the program using computer-readable media. A data structure used in the above-described method can be recorded in computer-readable media through various means. The computer-readable media for storing executable computer code for performing various methods of the present invention include storage media such as magnetic media (e.g., a read only memory (ROM), a floppy disk, and a hard disk) and optical media (e.g., a compact disc (CD)-ROM and a digital versatile disc (DVD)).

It will be apparent to those of ordinary skill in the technical field that various modifications and variations can be made without departing from the spirit or scope of the invention. Therefore, the disclosed methods should be construed in all aspects as illustrative and not restrictive. The scope of the present invention should be determined by the claims rather than the above description, and all differences within the equivalency range of the claims should be construed as falling within the scope of the present invention.

### [Industrial Applicability]

The present invention relates to a product customization service method and can be applied to a device and system for the method.

## Claims

1. A product customization method comprising:
providing product information including customizable sections to a user;
providing one or more pieces of candidate image data for customizing a first section among the customizable sections using a first user interface (UI);
receiving first specific customization image data selected by the user from among the pieces of candidate image data for customizing the first section;
providing one or more pieces of candidate image data, in which the first specific customization image data has been applied to the first section, for customizing a second section using a second UI;
receiving second specific customization image data selected by the user from among the pieces of candidate image data for customizing the second section; and
when each piece of specific customization image data for all of the customizable sections is completely received, providing a final image of a product in which each piece of specific customization image data has been applied to all of the customizable sections.

2. The product customization method of claim 1, wherein the customizable sections relate to an appearance of the product including design, parts, or color, and
the one or more pieces of candidate image data are images of the product with different appearances.

3. The product customization method of claim 1, wherein the customizable sections and the number of pieces of candidate image data for the customizable sections are preset according to a type of the product.

4. The product customization method of claim 1, wherein the providing of the candidate image data comprises requesting the user to input individual data when an individual data input option of the user is preset for customizing of the first section or the second section and applying received individual data to the first section or the second section when the individual data input by the user is received.

5. The product customization method of claim 1, wherein the first UI and the second UI provide the candidate image data so that browsing the candidate image data or selecting or deselecting specific customization image data is performed by a preset upward, downward, leftward, or rightward motion input.

6. The product customization method of claim 5, wherein when browsing the candidate image data is set to a leftward or rightward motion input in the first UI and the second UI, the one or more pieces of candidate image data are provided in a sequence or a reverse sequence every time the user inputs a leftward or rightward motion.

7. The product customization method of claim 6, wherein when selecting or deselecting the specific customization image data are respectively set to upward and downward motion inputs in the first UI and the second UI, the specific customization image data is selected or deselected by an upward or downward motion input of the user while the candidate image data is browsed.

8. The product customization method of claim 1, wherein the first UI or the second UI provides information indicating at least one of the number of customizable sections, the number of pieces of candidate image data, the number of customized sections among the customizable sections, and the number of non-customized sections among the customizable sections.

9. The product customization method of claim 1, wherein the first UI and the second UI are consecutively displayed in a mobile terminal of the user according to a motion input of the user and provide recommended candidate image data determined according to a preset reference when providing the one or more pieces of candidate image data.
